# EUROPEAN PATENT SPECIFICATION

(11) **EP 0 844 982 B1**
(45) Date of publication and mention of the grant of the patent: **25.06.2003**
(21) Application number: 97914352.6
(22) Date of filing: 02.04.1997
(51) Int. Cl.: C02F 11/06, F23G 7/04, D21C 11/12

(54) **METHOD FOR OXIDATION OF WASTE LIQUORS CONTAINING ORGANIC MATTER**
METHODE ZUR OXIDATION VON FLÜSSIGEN ABFÄLLEN MIT ORGANISCHEN INHALTSSTOFFEN
PROCEDE D'OXYDATION DE LIQUIDES RESIDUAIRES CONTENANT DES SUBSTANCES ORGANIQUES

(30) Priority: 03.04.1996 FI 961498
(43) Date of publication of application: 03.06.1998
(73) Proprietor: CONOX OY, FIN-00560 Helsinki (FI)
(72) Inventor: MYREEN, Bertel, FIN-00240 Helsingfors (FI)
(74) Representative: Hiltunen, Pentti Juhani
(86) International application number: FI9700203
(87) International publication number: WO97037944

(56) References cited:
- WO-A-86/07396
- WO-A-96/10544
- CH-A- 555 786
- JAAKKO POEYRY CLIENT MAGAZINE, Volume 1, 1995, BERTEL MYREN, "Closing up Bleach Plants - a Status Report From an Ekanobel/Jaakko Poeyry Project", page 2.

## Description

The present invention relates to a method for mineralisation by oxidation at substantial superatmospheric pressure of essentially all organic matter present in a concentrated liquor that has been obtained by evaporation of waste liquors.

Today, the industry is striving to minimise its environmental impact. A part of this impact is the discharge of contaminated effluent to waterways and the emission of polluted gases to the ambient air.

The effluent contains organic substances in low concentrations and inorganic ions, derived from raw materials and from chemicals introduced to the process. The organic matter is sedimented or degraded in the receiving water systems, thus consuming the oxygen in the water. Part of the organic matter is taken in by living organisms. Some of these substances may accumulate in living tissues and further in the food chain. Some of the substances are poisonous. The bulk of the inorganic matter is dissolved salts, which are present in large amounts in the receiving water systems. One of these is sodium chloride, of which there is 3 kg per m³ in the Baltic Sea and about 30 kg per m³ in the oceans. The inorganic matter, however, may also include small quantities of metal ions, which are considered harmful. These are mainly heavy metals such as zinc, lead, copper and cadmium.

The gases formed in combustion processes generally contain high amounts of carbon dioxide and often sulphur and nitrogen oxides. Recently a lot of attention has been paid on the pyrolysis residues in the gases, i.e. the so called polyaromatic hydrocarbons. Some chloro-organic substances contained in the flue gases are considered an environmental hazard even in very low concentrations.

Effluent as described above are formed in various processes, e.g. in food industry, in the chemical industry and in the forest industry. Some of these liquors are very concentrated and contain large quantities of valuable chemicals so that they are evaporated and burnt for chemical recovery. It is well-known that this is the case with pulp cooking liquors. However, pulp mill bleach plant effluent are so diluted that they are currently not evaporated nor combusted, even if such a method is known e.g. as disclosed in a Finnish patent No 85293, hereby incorporated as a reference.

Similar waste waters are produced even in other processes of the wood-processing industry, e.g. in debarking, in thermomechanical pulping for the production of TMP or CTMP pulp and in the chemical cooking of straw or other annual plants, such as bagasse and different species of grasses.

Typically, these effluent contain less than 10 per cent of dissolved material - often less than one per cent - and the inorganic material typically accounts for about 10 to 50 per cent of the total amount of dissolved material.

The waste waters are discharged to rivers, lakes and seas. In countries with stringent environmental rules and regulations this is done after external biological treatment in aerated lagoons or in activated sludge plants. In these plants the organic matter can to some degree but not completely be decomposed or solidified for separation. The dissolved inorganic matter, especially heavy metals, remain untouched. In principle, heavy metals could be separated from the effluent by means of chemical precipitation. However, with very low concentrations of the inorganic matter, a complete precipitation can not be achieved and the separation of the precipitated matter from large quantities of liquid is difficult.

Evaporation equipment for the concentration of even large effluent flows is today commercially available. When the effluent contains salts of limited solubility, a crystallization of these salts takes place when evaporating these liquors to a high dry solids content. As a result, the heat transfer surfaces of the evaporation equipment become fouled and the evaporation capacity is reduced. This tendency becomes all the more apparent the higher the target concentration of the evaporated liquid is. In evaporation, the effluent is separated in a condensate and a concentrate. The condensate can be reused in the process either as such or after further cleaning. The concentrate, which contains the bulk of the organic matter in the effluent and nearly all of the inorganic matter, needs to be disposed of. The best way to do this is to completely oxidise the organic matter to carbon dioxide and water vapour and to separate the harmful metals from the inorganic incineration residue.

There is equipment designed for incineration of concentrates that are especially difficult to treat. Commercial applications are available in many countries, e.g. as operated by Ekokem Oy in Finland. Also, some industrial enterprises have incineration equipment of their own for the disposal of hazardous waste. Characteristic of these installations is that they operate at atmospheric pressure and use air as an oxidising agent. To achieve a complete oxidation of all organic matter, a combustion temperature of at least 800 °C is required with a retention time of several seconds inside the combustion chamber. When incinerating liquids with high ash content, even if they have been evaporated to a high solids content, the necessary combustion temperature can be reached only by using supplementary fuel. These types of incineration furnaces are marketed by e.g. Ahlstrom Corporation and John Zink Company Ltd.

Air contains only about 21 % of oxygen, the bulk of the remainder being inert nitrogen, which creates a ballast for the incineration. With this ballast, a considerable amount of energy is needed to increase the temperature above 800°C. This is the primary reason why the furnaces need fossil fuel, e.g. natural gas or fuel oil, to achieve and to maintain the required combustion chamber temperature. The fossil fuel of course also requires combustion air, which further increases the amount of inert nitrogen to be passed through the combustion chamber and the subsequent flue gas duct.

The specific volume of gases is high at high temperatures and atmospheric pressure. As a result, the combustion chamber becomes very big and the devices needed for cleaning and transporting the gas become large and also expensive. For this reason the treatment of dilute effluent by evaporation and incineration has not become a common practice in the process industry.

It is generally known that the volume of gas at a given temperature decreases as the pressure is increased. This fact is utilised in e.g. gasifiers, as disclosed in publications WO-93/022 and WO-93/09205. However, they deal with methods to gasify organic matter in reducing conditions and not with complete oxidation of this matter.

The object of the present invention is to provide a method for treating preconcentrated waste liquors by complete oxidation of essentially all organic matter in the liquor to carbon dioxide and water vapour so that, at the same time, all harmful metals can be separated in a simple way from the inorganic incineration residue. This is accomplished in equipment that is substantially smaller and less expensive than the equipment now in use.

According to the present invention the following steps are performed under substantial superatmospheric pressure:
(a) a feed of the concentrated liquor, preheated to a temperature higher than about 10°C below the boiling point of water at said superatmospheric pressure, is oxidised essentially completely at a temperature of at least 800°C with a gas containing at least 60 per cent by volume of oxygen resulting in a suspension of hot gas and molten slag;
(b) the molten slag is separated from the hot gas and dissolved in water; and
(c) the separated hot gas is quenched to a temperature below 250°C with an aqueous liquid which is essentially free from organic matter and has pH above 7 and then withdrawn.

In this context the following terms are used:
"slag", the inorganic residue left after complete oxidation of the preheated concentrated liquor,
"molten slag", slag the substantial part of which is in liquid phase,
"brine", a solution formed when the slag is dissolved in water,
"solid residue" the insoluble part of the slag when it is dissolved in water,
"quench liquid", water or water containing only inorganic salts.

According to the present invention the oxidation of the preheated concentrated liquor thus takes place with a pressurised gas containing at least 60 per cent by volume of oxygen, preferably pure oxygen, and the oxidation is carried out under substantial superatmospheric pressure and thus in devices small in volume.

In a preferred embodiment of the present invention the method is carried out at a superatmospheric pressure of at least 100 kPa, preferably from about 900 to about 1100 kPa. It is essential that the oxidation is conducted with pressurised gas containing a surplus of oxygen in relation to the amount theoretically needed to completely oxidise all organic matter in the final concentrate. The preferred oxygen content of the pressurized gas is close to 100 per cent by volume, but the pressurised gas can be contaminated with other gases, e.g. nitrogen, carbon monoxide or carbon dioxide. The content of organic matter in the feed concentrate is chosen so that when preheated to the temperature required for the oxidation in step (a) it is possible to maintain a sufficient reaction temperature, at least 800°C, preferably 1000°C, in the reaction chamber. At this temperature the slag is in molten state.

According to the present invention, the molten slag is separated from the gas before it is brought into contact with an aqueous quench liquid. The molten slag is separated from the hot preferably by force of gravitation and/or with centrifugal force, after which the molten slag is brought into contact with water. Heavy metals contained in the slag will form insoluble salts, mainly carbonates, which can be separated from the brine formed when the slag is brought in contact with water.

According to a preferred embodiment of the present invention, the molten slag is allowed to flow down through constriction, such as a small passage to an agitated slag dissolving vessel, wherein water is introduced in such quantities that the steam generated will suffice to prevent hot gas from entering the dissolving vessel through said passage.

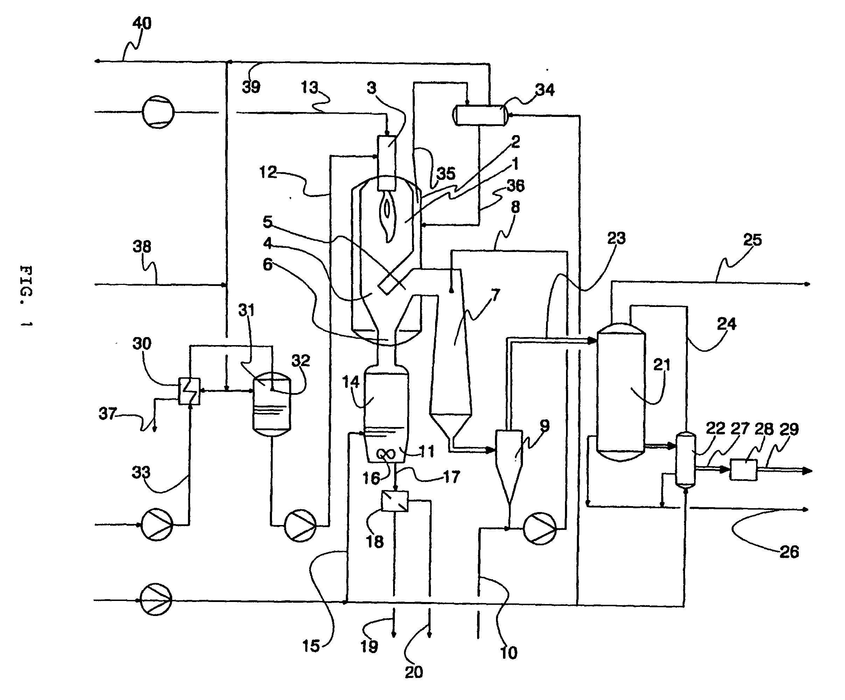

The present invention will hereafter be described in greater detail with reference to the enclosed drawing. The drawing illustrates a schematic side-view of a device especially suitable for carrying out the method of this invention.

In the enclosed Figure, number 1 denotes a reaction chamber, which is under a superatmospheric pressure of at least of 100 kPa, preferably about 1000 kPa. The outer shell of the reaction chamber is a pressure vessel 2 containing water with a pressure corresponding to that of the reaction chamber 1. There is therefore no essential pressure difference over the wall of the reaction chamber 1. In reaction chamber 1 there is a burner 3, to which the preheated concentrated liquor to be oxidised is pumped through a piping 12. Oxygen is fed to burner 3 with a compressor and through the piping 13. If oxygen has a sufficient pressure in its storage tank, the compressor is unnecessary. The oxygen can be contaminated by other gases, e.g. by nitrogen. In the latter case the minimum oxygen content of the gas is 60 per cent by volume.

Inside the reaction chamber 1 a minimum temperature of 800°C is maintained, preferably about 1000°C so that complete oxidation of the organic material is accomplished and all inorganic substances melt to form a molten slag. Some molten slag particles hit the inner surfaces of the reactor and flow down on them. The inner walls of the reactor 1, built of a suitable metal, can be furnished with fire-proof refractory material. However, according to a preferred embodiment of the present invention, the reactor inner wall is not furnished with any refractory material, but the reactor wall is effectively cooled with water, causing the slag to adhere to the wall and form a solidified layer, reducing the heat transfer through the wall and protecting the metal against corrosion.

The water inside the pressure vessel 2 will partly vaporise. The mixture of water and steam is led to a steam drum 34 through the duct 35. In this drum the steam is separated from the water, which is fed back into the pressure vessel 2 through the duct 36.

It is not possible to maintain a stable continuous reaction in the reaction chamber 1 unless the feed of the concentrated liquor is heated to a temperature close to the boiling point of water at the reaction chamber pressure. Therefore the feed of the concentrated liquor is heated to a temperature higher than 10°C below the boiling point of water at the reaction chamber pressure. According to a preferred embodiment of the present invention, this will take place in two steps, first indirectly in a steam-heated heat exchanger 30 and subsequently by direct steam in a pressurised storage vessel 31. In order to obtain a big contact area between the incoming liquor and the steam, the liquor is fed through an atomising nozzle 32 into the storage vessel 31 above the liquid level in this vessel. The liquor is pumped through the piping 33. The devices are preferably designed so that a great proportion of the heating takes place in the heat exchanger, from which the condensate is extracted through the pipe 37 and not mixed with the preheated concentrated liquor.

Steam to the devices 30 and 31 is taken from the drum 34 via pipe 39. The amount of steam is balanced by external steam through the pipe 38, or when there is a surplus of steam, by extracting it through the pipe 40.

Because the reaction chamber shell is subject to almost no stress, it can be designed relatively freely. The lower part can be built with passage 4, through which a suspension of the gas and the molten slag can flow. With a suitably formed lower part of the reaction chamber 1, a large proportion of the molten slag is captured on the inner walls of the chamber and is thereby separated from the gas. Because of the high density difference between the slag and the gas, molten slag droplets suspended in the gas can be separated by changing the flow direction of the gas, e.g. by making the gas flow through rising channel 5, while the slag due to gravitation flows downwards through passage 6. Passage 6 leads to slag dissolving vessel 14. Because there is an open passage between reaction chamber 1 and slag dissolving vessel 14, the pressures in these vessels are equal.

The gas and the molten slag are separated at a temperature not essentially different from the reaction temperature inside the reactor chamber 1. The hot gas is led to a contact device 7, in which the gas is rapidly cooled with a quench liquid. One embodiment of the present invention is that the quench liquid is sprayed into the device 7 with a nozzle 8. Inside the contanct device 7 an intensive mixing of gas and quench liquid takes place, and the gas is quenched to a temperature close to the boiling point of water at the contact device pressure, which is nearly the same as the pressure in the reactor chamber. The salt fumes that are contained in the hot gas are to a great extent captured by the quench liquid. A part of the energy released when the gas is quenched will evaporate water from the quench liquid. This vapour is mixed with the gas that has been quenched.

The quench liquid is separated from the gas in device 9, from which device the quench liquid is recirculated 8 to the contact device 7. Makeup water is taken to the quench liquid loop through the pipe 10. Optionally the pH of the quench liquid can be increased by adding alkaline in the makeup water.

The molten slag flows through passage 6 down to pressure vessel 14 to which water is led via piping 15. The liquid in vessel 14 is agitated e.g. with an impeller 16 in the vessel 14. The flow of incoming water and its temperature are adjusted so that a certain amount of steam is released when the molten slag is dissolved in the brine 11 in vessel 14. The steam flows up through passage 6 and prevents the hot gas from entering vessel 14. This steam is mixed with the hot gas in channel 5. In this way the temperature in vessel 14 will not exceed the temperature of the saturated steam released from the brine 11. This makes the choice of material for pressure vessel 14 easier.

To stabilise the salt content and the volume of the liquid in vessel 14, brine is extracted via piping 17. Some material contained by the brine is not easily soluble. Usually the salt solution is alkaline, because part of the anionic organic matter is removed through oxidation and the corresponding cationic matter present in the slag has reacted with carbon dioxide in the gas and formed carbonates. If this does not happen, for example sodium carbonate or sodium sulphide can be brought in with incoming water through piping 15. Heavy metals contained in the slag form practically insoluble carbonates and sulphides, a solid residue. They can therefore be removed as a solid phase from the salt solution. This is done with e.g. filter 18 or a centrifuge. If necessary, the brine can be cooled before the solid phase is separated. The brine, from which the solid residue is removed, comes then out as flow 19, while the solid residue 20 is removed separately for further treatment.

The cooled exhaust gas flowing out from device 9 via piping 23 consists mainly of carbon dioxide and water vapour. It also contains a certain amount of oxygen necessary to maintain an oxidising environment in all parts of the equipment. The gas in duct 23 also contains a certain amount of droplets of concentrate, because the separation of the final concentrate from the cooled gas in device 9 may be incomplete.

The water vapour in the exhaust gas in duct 23 originates partly from the residual moisture in the final concentrate that has been led to burner 3, partly from the reaction between oxygen and hydrogen present in the organic matter of the final concentrate, and partly from pressure vessel 14. Also, the evaporation of quench liquid 8 in contact device 7 increases the amount of water vapour in the exhaust gas.

By cooling the outgoing gas, most of the water vapour can be condensed and removed in liquid state. Droplets of entrained concentrate in the condensate are also separated, which purifies the gas. At the same time, the gas volume is substantially reduced. The condensation of the water content of the exhaust gas is illustrated in the enclosed Figure by heat exchangers 21 and 22, to which the gas is led via piping 23. Cold water is pumped via piping 15 through heat exchanger 21 and then via piping 24 to heat exchanges 22, preferably in the countercurrent mode shown in the Figure. The water is heated and vaporised in the heat exchangers and exhausted as low-pressure steam through piping 25. The potentially somewhat contaminated condensate is discharged via piping 26. The quality of the concentrate determines whether it can be used as process water or whether it e.g. should be combined with the waste liquor from which the concentrate derives and recirculated to the equipment described herein.

The quenched gas is exhausted from heat exchanger 22 via piping 27. Its main component is now carbon dioxide. It also contains the surplus oxygen and possibly some traces of organic pollutants. The gas volume is low because of the superatmospheric pressure and the low temperature after cooling. If required, the gas can still be led through adsorption device 28, for example through a cartridge of activated carbon, before it is used as pure carbon dioxide elsewhere in the process or discharged into the atmosphere via a pressure relief valve and outlet 29.

### Example

A preferred embodiment of the present invention is described in the following example. At the same time, the advantages of the invention over known technology are pointed out.

A pulp mill with a daily production of 1,000 tonnes of bleached softwood pulp can be considered typical for modern pulp industry. The mill uses chlorine dioxine and caustic soda as bleaching chemicals. During the bleaching process, approximately 20 kg of organic substances are discharged per tonne of pulp produced. Bleaching chemical residues, an additional 20 kg of salts per tonne of pulp, are also discharged. The salt is mostly sodium chloride. Part of the sodium is bound to organic acids that have been formed during the bleaching process. These substances are transferred into the bleaching plant effluent. For this effluent a chemical oxygen demand (COD) of 22 kg per tonne of pulp is typical.

To achieve a complete oxidation of all organic matter - including chlorinated organic matter - the oxidation must occur with a surplus of oxygen at a temperature of about 1000°C. With the present invention this can be accomplished in the following way:

Feed liquor is expected to have reached a dry solids content of about 45 % by means of evaporation. It is then preheated in devices 30 and 31 to a temperature of 180°C: The reaction chamber pressure is 10 bar. At this temperature and dry solids content, half of which is oxidable organic material, the reaction temperature of 1000°C can be maintained in the reaction chamber, provided pure oxygen is used for the reaction. It is assumed that a surplus of 3 per cent of oxygen is used in the reactor.

In this case 0.253 kg/s of oxygen 13 is brought to the reactor to achieve in principle complete oxidation. The reaction products formed are 0.258 kg/s of inorganic molten slag and 1.090 kg/s of gas, consisting of carbon dioxide, water vapour and surplus oxygen. At a temperature of 1000°C and with a superatmospheric pressure of 10 bar the gas flow rate through the reactor outlet is 0.515 m³/s. With a gas velocity of 10 m/s the flow cross section is 5.15 dm², corresponding to a pipe with an inner diameter of about 250 mm.

The flow of molten slag through reactor outlet 4 is about 0.215 dm³/s. With a flow velocity of 1 m/s the molten slag fills a flow cross section of about 0.02 dm³, which is below 1% of that of the gas. The density of the gas in that state is about 2.11 kg/m³, while the density of the flowing slag is about 1200 kg/m³. The separation of the molten slag from the gas is therefore not difficult.

In case a salt concentrate of about 35% is kept in the dissolving vessel 14, an amount of 0.92 kg/s of water has to be added via piping 15. Of the water that has been added, about 0.17 kg/s is vaporised when the hot molten slag is quenched and dissolved in water. At an overpressure of 10 bar, the vapour reaches a temperature of about 180°C and the flow rate is 0.038 m³/s. If an inner diameter of 100 mm is chosen for passage 6, the steam upward flow velocity in the passage is about 5 m/s, which is sufficient to prevent hot gas from entering vessel 14. If dissolving vessel 14 is designed for a residence time of 15 minutes, the required brine volume is about 0.7 m³ in this vessel.

After direct evaporation in device 9 the exhaust gas to heat exchanger 21 contains about 0.355 kg/s of carbon dioxide, 0.0075 kg/s of oxygen and 1,151 kg/s of water vapour. The total flow rate for the gas at an overpressure of 10 bar and temperature of 180°C is 0.272 m³/s. If the chosen inner diameter for piping is 200 mm, the gas flow velocity will be about 8.5 m/s. The vapour pressure in the gas is high, about 886 kPa, which makes it possible to condense a substantial part of the water vapour from the withdrawn gas 23. If the gas is cooled to 100°C in the heat exchanger 21, more than 98% of the vapour will condensate and the total exhaust gas flow becomes about 0.380 kg/s. The gas flow 23 at 10 bar superatmospheric pressure is about 20 dm³/s, and can be transported in a pipe with an inner diameter of 80 mm.

For comparison and to point out the advantages of the invention over the state-of-the-art technology, the same calculation is performed for the case where evaporated effluent from the same assumed bleach plant is incinerated in the conventional way.

with conventional technology, the concentrate would be disposed of in an atmospheric incinerator with air as the source of oxygen. It is likely that the waste liquor would be evaporated to a dry solids content higher than 45 %, which - as described in the above example - would be sufficient according to the present invention. Let us assume that the concentrate is evaporated to a dry solids content of 50% before it is fed into the incinerator.

To reach a combustion temperature of 1000°C, supplementary fuel is needed in the incinerator. Because of the nitrogen ballast in the combustion air, about 0.6 kg of oil is needed for each kilogram of dry solids of concentrate. Because the gases are of atmospheric pressure, water vapour can not be condensed from the exhaust gas at temperatures above 100°C and thus used for production of pressurised steam. Provided no large quantities of low-grade warm water are produced, the water vapour is exhausted with the gases, which has been assumed when calculating the values in the table below.

The following Table gives data for comparison of concentrate oxidation as accomplished with the present invention and as performed with the state-of-the-art technology. The figures refer to the pulp mill bleach plant example given previously.

Comparison between the invention and state-of-the-art technology

| | | Invention | State-of-the-art |
|---|---|---|---|
| Feed dry solids content | % | 45.0 | 50.0 |
| Oxygen consumption | kg/h | 912 | - |
| Oil consumption | kg/h | - | 995 |
| Reactor temperature | °C | 1000 | 1000 |
| Residence time in reactor | s | 2 | 2 |
| Reactor volume | m³ | 1.0 | 23.2 |
| Exhaust gas temperature | °C | 100 | 100 |
| Discharged exhaust gas volume | m³/h | 72 | 25,400 |

As can be seen, the present invention makes it possible to oxidise the concentrate at the required 1000 °C reactor temperature with a lower dry solids content of the feed concentrate. In this example of the invention the oxidation is done with pure oxygen. Also, the novel procedure does not require any supplementary fuel, contrary to conventional methods. The amounts of oxygen in the novel technology and fuel oil in the state-of-the-art technology are nearly equal.

As the cost of oxygen per kg is about half the cost of fuel oil per kg, the operating costs of the novel technology will be considerably smaller than those of conventional methods.

The present invention leads to a significantly smaller equipment volume as can be seen in the comparison between the required reactor volumes. According to the present invention, the reactor volume is less than 5% of the combustion chamber volume in conventional incinerators with corresponding design values. The difference between the exhaust gas volumes is notable, too. This is reflected in the size and cost of the equipment for transporting and cleaning of the exhaust gas.

## Claims

1. A method for essentially complete oxidation of a concentrated liquor (33) containing oxidable organic matter, comprising the following steps performed under substantial superatmospheric pressure:
(a) a feed (12) of the concentrated liquor (33), preheated (30, 31) to a temperature higher than about 10°C below the boiling point of water at said superatmospheric pressure, is oxidised (1) essentially completely at a temperature of at least 800°C with a gas (13) containing at least 60 per cent by volume of oxygen, resulting in a suspension (4) of hot gas and molten slag;
(b) the molten slag is separated from the hot gas (5) and dissolved in water (15); and
(c) the separated hot gas (5) is quenched (7) to a temperature below 250°C with an aqueous liquid (8) which is essentially free from organic matter and has a pH above 7, and then withdrawn (23).

2. The method of claim 1 performed at the superatmospheric pressure of at least 100 kPa, preferably at 900 - 1100 kPa.

3. The method of claims 1 and 2, comprising oxidising with a gas (13) containing an amount of oxygen theoretically sufficient to completely oxidise all organic matter in the concentrated liquor (33) to carbon dioxide and water.

4. The method of any of the previous claims, comprising separating the molten slag from the hot gas (5) by gravitation and/or centrifugal force.

5. The method of any of the previous claims wherein the separated molten slag is directed to flow through a constriction (6) into an agitated (16) zone (14), into which water (15) is fed in such a quantity that sufficient steam is formed, when the molten slag is quenched with the water (15), to prevent any substantial quantity of hot gas (5) from entering through the constriction (6).

6. The method of any of the previous claims, comprising incorporating carbonate ions in the water (15) fed into the zone (14) to form insoluble metal carbonates of metals contained in the molten slag.

7. The method of any of claims 1-5, comprising incorporating sulphide ions in the water (15) fed into the zone (14) to form insoluble sulphides of metals contained in the molten slag.

8. The method of claim 6 or 7 wherein a solid residue (20), comprising the insoluble carbonates and/or sulphides, is separated from a brine (11), formed by the slag and the water (15), by filtration (18) or by using centrifugal force.

9. The method of any of the previous claims wherein the quenched and withdrawn gas (23) is further indirectly cooled (21, 22) to a temperature preferably below 100°C, in order to condense water vapour from it and to produce an exhaust gas (27) of substantially reduced volume.

10. The method of claim 9 wherein the cooling is effected with boiling water (24), thus generating steam (25) that is withdrawn.

11. The method of claim 9 or 10 wherein the exhaust gas (27), after cooling (21, 22) is led through an adsorbing medium (28), preferably activated carbon, to remove possible traces of organic matter.

12. The method of claim 1 wherein the oxygen-containing gas (13) used for oxidation in step (a) is off-gas from some other process, e.g. an ozone bleach stage in a pulp mill.

## Patentansprüche

1. Verfahren zur im Wesentlichen vollständigen Oxidation einer konzentrierten Flüssigkeit (33), die oxidierbares organisches Material enthält, mit den folgenden Schritten, die bei einem erheblich über dem atmosphärischen Druck liegenden Druck ausgeführt werden:
(a) eine Speisemenge (12) der konzentrierten Flüssigkeit (33), die auf eine Temperatur von mehr als ungefähr 10°C unterhalb des Siedepunktes des Wasser bei dem über dem atmosphärischen Druck liegenden Druck vorgeheizt wird (30, 31), wird im Wesentlichen vollständig bei einer Temperatur von zumindest 800° C mit einem Gas (13) oxidiert (1), das zumindest 60 Volumenprozente an Sauerstoff enthält, was zu einer Suspension (4) von heißem Gas und geschmolzener Schlacke führt;
(b) die geschmolzene Schlacke wird von dem heißen Gas (5) getrennt und in Wasser (15) gelöst; und
(c) das abgetrennte heiße Gas (5) wird auf eine Temperatur unterhalb von 250°C mit einer wässrigen Flüssigkeit (8), die im wesentlichen frei von organischem Material ist und einen pH-Wert über 7 hat, abgekühlt (7) und dann abgezogen (23).

2. Verfahren nach Anspruch 1, das bei einem über dem atmosphärischen Druck liegenden Druck von zumindest 100 kPa, vorzugsweise bei 900-1100 kPa ausgeführt wird.

3. Verfahren nach den Ansprüchen 1 und 2, das die Oxidation mit einem Gas (13) umfaßt, das eine Menge von Sauerstoff enthält, die theoretisch ausreicht, um das gesamte organische Material in der konzentrierten Flüssigkeit (33) zu Kohlendioxid und Wasser zu oxidieren.

4. Verfahren nach einem der vorhergehenden Ansprüche, das die Trennung der geschmolzenen Schlacke von dem heißen Gas (5) durch Schwerkraft und/oder Zentrifugalkraft umfaßt.

5. Verfahren nach einem der vorhergehenden Ansprüche, bei dem die getrennte geschmolzene Schlacke so gelenkt wird, daß sie durch eine Verengung (6) in eine einer Bewegung (16) unterworfene Zone (14) strömt, in die Wasser (15) in einer derartigen Menge eingespeist wird, daß eine ausreichende Dampfmenge gebildet wird, wenn die geschmolzene Schlacke mit dem Wasser (15) abgekühlt wird, um zu verhindern, daß irgendeine wesentliche Menge von heißem Gas (5) durch die Verengung (6) hindurch eintritt.

6. Verfahren nach einem der vorhergehenden Ansprüche, das die Einfügung von Karbonat-lonen in das Wasser (15) umfaßt, das in die Zone (14) eingespeist wird, um unlösliche Metallkarbonate von in der geschmolzenen Schlacke enthaltenen Metallen zu bilden.

7. Verfahren nach einem der Ansprüche 1 bis 5, das die Einfügung von Sulfidlonen in das Wasser (15) umfaßt, das in die Zone (14) eingespeist wird, um unlösliche Sulfide von Metallen zu bilden, die in der geschmolzenen Schlacke enthalten sind.

8. Verfahren nach Anspruch 6 oder 7, bei dem ein fester Rückstand (20), der die unlöslichen Karbonate und/oder Sulfide umfaßt, von einer durch die Schlacke und das Wasser (15) gebildeten Sole (11) durch Filtrieren (18) oder durch die Verwendung einer Zentrifugalkraft getrennt wird.

9. Verfahren nach einem der vorhergehenden Ansprüche, bei dem das abgekühlte und abgezogene Gas (23) weiter indirekt auf eine Temperatur vorzugsweise unter 100°C gekühlt (21, 22) wird, um Wasserdampf aus diesem zu kondensieren und um ein Abgas (27) mit wesentlich verringertem Volumen zu erzeugen.

10. Verfahren nach Anspruch 9, bei dem die Kühlung mit siedendem Wasser (24) bewirkt wird, wodurch Dampf (25) erzeugt wird, der abgezogen wird.

11. Verfahren nach Anspruch 9 oder 10, bei dem das Abgas (27) nach dem Kühlen (21, 22) durch ein adsorbierendes Medium (28), vorzugsweise Aktivkohle, geleitet wird, um mögliche Spuren von organischem Material zu beseitigen.

12. Verfahren nach Anspruch 1, bei dem das Sauerstoff enthaltende Gas (13), das für die Oxidation im Schritt (a) verwendet wird, Abgas von irgendeinem anderen Prozeß ist, beispielsweise einer Ozonbleichstufe in einem Zellstoffwerk.

## Revendications

1. Procédé pour l'oxydation pratiquement complète d'une liqueur concentrée (33) contenant de la matière organique oxydable, comprenant les étapes suivantes effectuées sous une pression élevée supérieure à la pression atmosphérique :
(a) un flux entrant (12) de la liqueur concentrée (33), préchauffé (30, 31) à une température supérieure à environ 10°C en dessous du point d'ébullition de l'eau à ladite pression supérieure à la pression atmosphérique, est oxydé (1) pratiquement complètement à une température d'au moins 800°C avec un gaz (13) contenant au moins 60 pour cent en volume d'oxygène, aboutissant à une suspension (4) de gaz chaud et de scories fondues ;
(b) les scories fondues sont séparées du gaz chaud (5) et dissoutes dans de l'eau (15) ; et
(c) le gaz chaud séparé (5) subit une trempe (7) à une température située en dessous de 250°C avec un liquide aqueux (8) lequel est pratiquement exempt de matière organique et a un pH situé au-dessus de 7, et il est ensuite soutiré (23).

2. Procédé de la revendication 1 effectué à la pression supérieure à la pression atmosphérique égale à au moins 100 kPa, de préférence à 900-1100 kPa.

3. Procédé des revendications 1 et 2, comprenant d'oxyder avec un gaz (13) contenant une quantité d'oxygène théoriquement suffisante pour oxyder complètement toute la matière organique dans la liqueur concentrée (33) en dioxyde de carbone et en eau.

4. Procédé de l'une quelconque des revendications précédentes, comprenant de séparer les scories fondues du gaz chaud (5) par gravitation et/ou force centrifuge.

5. Procédé de l'une quelconque des revendications précédentes dans lequel on fait couler les scories fondues séparées à travers un étranglement (6) dans une zone (14) agitée (16), dans laquelle on introduit de l'eau (15) en quantité telle qu'une quantité suffisante de vapeur se forme, lorsque les scories fondues subissent une trempe avec l'eau (15), afin d'empêcher toute quantité importante de gaz chaud (5) d'entrer dans l'étranglement (6).

6. Procédé de l'une quelconque des revendications précédentes, comprenant d'incorporer des ions carbonate dans l'eau (15) introduite dans la zone (14) pour former des carbonates de métal insolubles de métaux contenus dans les scories fondues.

7. Procédé de l'une quelconque des revendications 1-5, comprenant d'incorporer des ions sulfures dans l'eau (15) introduite dans la zone (14) pour former des sulfures insolubles de métaux contenus dans les scories fondues.

8. Procédé de la revendication 6 ou 7 dans lequel un résidu solide (20), comprenant les carbonates et/ou les sulfures insolubles, est séparé d'une saumure (11), formée par les scories et l'eau (15), par filtration (18) ou en utilisant la force centrifuge.

9. Procédé de l'une quelconque des revendications précédentes dans lequel le gaz (23) ayant subi une trempe et soutiré est en plus refroidi (21, 22) indirectement jusqu'à une température située de préférence en dessous de 100°C, afin de condenser la vapeur d'eau contenue dans celui-ci et de produire un gaz d'échappement (27) de volume fortement réduit.

10. Procédé de la revendication 9 dans lequel on effectue le refroidissement avec de l'eau bouillante (24), générant ainsi de la vapeur (25) qui est soutirée.

11. Procédé de la revendication 9 ou 10 dans lequel le gaz d'échappement (27), après refroidissement (21, 22) est amené sur un milieu adsorbant (28), de préférence du charbon actif, pour enlever les traces éventuelles de matière organique.

12. Procédé de la revendication 1 dans lequel le gaz contenant de l'oxygène (13) utilisé pour l'oxydation dans l'étape (a) est un effluent gazeux en provenance de quelque autre procédé, par exemple d'une étape de blanchiment à l'ozone dans une usine de fabrication de pâte à papier.
